# EUROPEAN PATENT APPLICATION

(11) **EP 4 843 777 A1**
(43) Date of publication of application: **25.11.2026**
(21) Application number: 25741770.9
(22) Date of filing: 09.01.2025
(51) Int. Cl.: B32B 27/30, B32B 27/20

(54) **METALLIC-TONED DECORATIVE LAMINATE, METALLIC-TONED ARTICLE, AND METHOD FOR PRODUCING DECORATIVE LAMINATE**

(30) Priority: 18.01.2024 JP 2024006323
(71) Applicant: Wavelock Advanced Technology Co., Ltd, Tokyo 104-0044 (JP)
(72) Inventor: HOSHI, Kenta, Koga-shi, Ibaraki 306-0204 (JP)
(74) Representative: Kraus & Lederer PartGmbB
(86) International application number: PCT/JP2025/000486
(87) International publication number: WO 2025/154638

(57) **Abstract**

Provided are a metallic decorative laminate, an intermediate laminate, a multilayer laminate, a decorative laminate, and a metallic article which include: a lustrous resin layer containing a resin component (1), one or two or more coloring matters, and one or two or more lustrous materials, the resin component (1) containing one or two or more fluorine-based resins; and a transparent resin layer containing a resin component (2) containing one or two or more fluorine-based resins, and also provided are a method for producing the intermediate laminate and a method for producing the decorative laminate.

## Description

### TECHNICAL FIELD

The present invention relates to a metallic decorative laminate, an intermediate laminate, a multilayer laminate, a decorative laminate, a metallic article, a method for producing the intermediate laminate, and a method for producing the decorative laminate.

### BACKGROUND ART

In order to enhance the designability of a resin molded body, metallic gloss has been imparted to the surface of the resin molded body. Metal plating has been performed as a means for imparting the metallic gloss (Patent Literature 1). As another application, an electromagnetic wave transmitting lustrous coating resin product (Patent Literature 2) has been created.

### CITATION LIST

### PATENT LITERATURE

Patent Literature 1: JP 2002-241948 A
Patent Literature 2: JP 2010-030075 A

### SUMMARY OF INVENTION

### PROBLEMS TO BE SOLVED BY INVENTION

An object of the present invention is to provide a metallic decorative laminate, an intermediate laminate, a multilayer laminate, a decorative laminate, and a metallic article which exhibit an excellent metallic design, reduce an environmental load during production, and have improved chemical resistance and weather resistance, and also to provide a method for producing the intermediate laminate and a method for producing the decorative laminate.

### SOLUTION TO PROBLEMS

As a result of intensive studies to solve the above-described problems, the present inventor provides the following [1] to [7].
[1] A metallic decorative laminate including:
   a lustrous resin layer containing a resin component (1), one or two or more coloring matters, and one or two or more lustrous materials, the resin component (1) containing one or two or more fluorine-based resins; and
   a transparent resin layer containing a resin component (2) containing one or two or more fluorine-based resins.
[2] An intermediate laminate including a substrate on a transparent resin layer side of the metallic decorative laminate according to [1].
[3] A multilayer laminate including a base layer on a lustrous resin layer side of the intermediate laminate according to [2].
[4] A decorative laminate including a base layer on a lustrous resin layer side of the metallic decorative laminate according to [1].
[5] A metallic article including the metallic decorative laminate according to [1].
[6] A method for producing the intermediate laminate according to [2], including, in this order: applying a coating liquid containing one or two or more fluorine-based resins; applying a coating liquid containing one or two or more fluorine-based resins, one or two or more coloring matters, and one or two or more lustrous materials; and heating the coating liquid.
[7] The method for producing the decorative laminate according to [4], including peeling the substrate from the multilayer laminate according to [3].

### EFFECTS OF INVENTION

According to the present invention, it is possible to provide a metallic decorative laminate, an intermediate laminate, a multilayer laminate, a decorative laminate, and a metallic article which exhibit an excellent metallic design, reduce an environmental load during production, and improve chemical resistance and weather resistance, and also to provide a method for producing the intermediate laminate and a method for producing the decorative laminate.

### BRIEF DESCRIPTION OF DRAWINGS

Fig. 1 is a schematic view illustrating an example of a multilayer laminate including a metallic decorative laminate of the present embodiment.
Fig. 2 is a schematic view of a lustrous material in a lustrous resin layer.

### DESCRIPTION OF EMBODIMENTS

Patent Literature 1 describes an invention relating to a vehicle synthetic resin plated member that exhibits metallic gloss by plating a synthetic resin member. However, metal plating has problems that the process is complicated with an expensive production cost, and that waste liquid is generated with a large environmental load. In addition, when the surface of the molded body has an uneven shape, it is difficult to apply a uniform and beautiful plating film.

Patent Literature 2 describes an aluminum-tone bumper that transmits a millimeter wave. However, although a metallic design is developed by aluminum flakes, attention is paid to millimeter wave transmittance, and sufficient studies on chemical resistance and weather resistance have not been made.

On the other hand, the metallic decorative laminate of the present disclosure has a specific layer configuration, so that it is possible to obtain a metallic decorative laminate exhibiting an excellent metallic design and having improved chemical resistance and weather resistance.

In addition, it is possible to provide an intermediate laminate, a multilayer laminate, a decorative laminate, and a metallic article including the metallic decorative laminate as a constituent element, and also to provide a method for producing the intermediate laminate and a method for producing the decorative laminate.

Hereinafter, the metallic decorative laminate, the intermediate laminate, the multilayer laminate, the decorative laminate, the metallic article, and the method for producing the metallic article and the metallic decorative laminate according to the present invention will be described. Note that the present invention is not limited to the following examples.

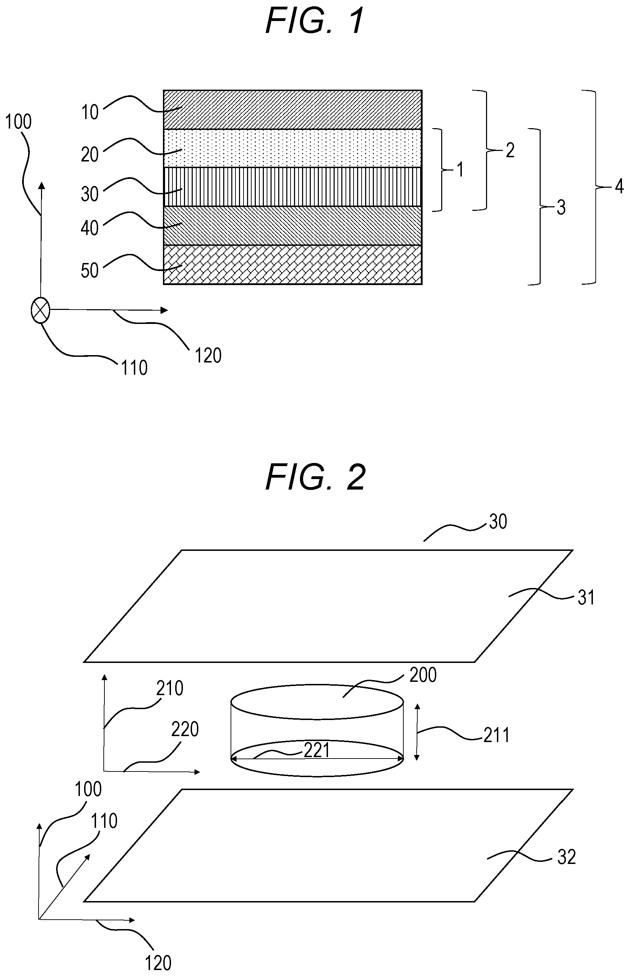

In the present disclosure, a thickness direction 100 means a laminating direction of the metallic decorative laminate or the metallic article, and a width direction 110 means a direction different from the thickness direction and orthogonal to a longitudinal direction 120 of the metallic decorative laminate or the metallic article, as illustrated in Fig. 1. For example, when a later-described intermediate laminate is produced by roll-to-roll, the longitudinal direction 120 corresponds to a machine direction (MD), and the width direction 110 corresponds to a transverse direction (TD) perpendicular to the MD.

Hereinafter, an embodiment (hereinafter, it may be referred to as "the present embodiment") of the present disclosure will be described. Note that, in the present disclosure, numerical values relating to "or more", "or less", "to", and the like regarding the description of the numerical range are numerical values that can be arbitrarily combined.

In addition, the preferable definition can be arbitrarily adopted. That is, one of the preferable definitions can be adopted in combination with one or more of the other preferable definitions. It can be said that a combination of preferable ones is more preferable.

### [Metallic decorative laminate]

The metallic decorative laminate is required to be a metallic decorative laminate including: a lustrous resin layer containing a resin component (1), one or two or more coloring matters, and one or two or more lustrous materials, the resin component (1) containing one or two or more fluorine-based resins; and a transparent resin layer containing a resin component (2) containing one or two or more fluorine-based resins.

The metallic decorative laminate includes a lustrous resin layer and a transparent resin layer. The lustrous resin layer contains a resin component (1), a coloring matter, and a lustrous material, and the resin component (1) contains a fluorine-based resin. The transparent resin layer contains a resin component (2), and the resin component (2) contains a fluorine-based resin.

The metallic decorative laminate of the present embodiment can be used, for example, for decorating a resin part, a metal part, or the like such as a bumper for vehicles (hereinafter, also simply referred to as an "article") by a film decoration method such as insert molding or overlay molding using a multilayer laminate including the metallic decorative laminate. Further, the multilayer laminate including the metallic decorative laminate may be used for decorating the surface of an article with a sticky layer or an adhesive layer interposed therebetween, and for example, can be used as a surface layer in an automobile exterior such as an automobile pillar, a door molding, a roof molding, the entire surface of a door, or the entire surface of a roof. In addition, the metallic decorative laminate of the present embodiment exhibits an excellent metallic design and is excellent in chemical resistance and weather resistance, and thus is preferable for outdoor use. Further, since it is excellent in chemical resistance, it is preferable to use the metallic decorative laminate for decoration of a four-wheeled vehicle, a two-wheeled vehicle, a pump, or the like using a lubricating oil.

Furthermore, although details will be described later, the metallic decorative laminate of the present embodiment is preferable because it is easy to produce and is excellent in mass productivity.

The layer thickness of the metallic decorative laminate of the present embodiment is preferably 20 µm or more, more preferably 30 µm or more, still more preferably 35 µm or more, and still more preferably 40 µm or more in order to improve designability and weather resistance, and is preferably 100 µm or less, more preferably 80 µm or less, still more preferably 70 µm or less, and still more preferably 65 µm or less in order to improve moldability. It seems that the chemical resistance is preferable when the layer thickness is large, but it has been found that the chemical resistance is rather deteriorated when the layer thickness is too large.

In order to balance designability, weather resistance, and chemical resistance, the layer thickness is preferably 20 µm or more and 100 µm or less, more preferably 30 µm or more and 80 µm or less, still more preferably 35 µm or more and 70 µm or less, and still more preferably 40 µm or more and 65 µm or less.

In the present disclosure, the term "designability" refers to a property in which, by using the metallic decorative laminate of the present disclosure for an article, the article develops a metallic design, and a required color tone can be expressed by a coloring matter and a lustrous material to be added.

In the present disclosure, the term "chemical resistance" is a property of suppressing dissolution, expansion, and reaction even when an organic solvent, a lubricating oil, or the like adheres to the transparent resin layer contained in the metallic decorative laminate of the present disclosure, and refers to a property including oil resistance and solvent resistance. The chemical resistance can be evaluated, for example, by the method described in Examples.

In the present disclosure, the term "weather resistance" refers to a property that deformation, discoloration, deterioration, and the like are less likely to occur when used outdoors, and can be evaluated, for example, by the method described in Examples.

In the present disclosure, the term "moldability" refers to a property in which when a metallic article is produced using the metallic decorative laminate of the present disclosure, the production is easy. The moldability is preferable because breakage and the like during molding can be suppressed by increasing the layer thickness, and is preferable because a fine portion of an article can also be decorated by reducing the layer thickness. For example, it can be evaluated by the method described in Examples.

The total light transmittance of the metallic decorative laminate of the present embodiment can be adjusted as necessary. As will be described later, the metallic decorative laminate of the present embodiment develops a metallic design by the contained lustrous material and coloring matter.

The total light transmittance of the metallic decorative laminate of the present embodiment can be appropriately adjusted according to the content of the lustrous material, the shape of the lustrous material, and the content of the coloring matter or the like.

The total light transmittance of the metallic decorative laminate of the present embodiment is preferably small because a metallic design can be developed when external light is strong on a day with sunlight. The total light transmittance can be adjusted by the content of the lustrous material and/or the coloring matter. When a light source is installed on the article side of the metallic decorative laminate, and a color is developed by light transmitted through the metallic decorative laminate, the total light transmittance is preferably large. When the content is increased to more strongly develop a metallic design by a lustrous material, the total light transmittance is lowered, which is preferable in order to shield the color of an article to which the metallic texture is imparted. The total light transmittance is also lowered by increasing the content of the coloring matter in order to adjust the color tone. In order to develop such an effect, the total light transmittance is preferably 3% or more, more preferably 5% or more, still more preferably 6% or more, and even more preferably 8% or more, and the upper limit value is not particularly limited, but is preferably 40% or less, more preferably 30% or less, still more preferably 20% or less, and even more preferably 15% or less as long as the metallic design of the metallic decorative laminate of the present disclosure is developed. The color of the article may be substantially unrecognizable from the metallic decorative laminate side. More specifically, it is preferably 3% or more and 40% or less, more preferably 5% or more and 30% or less, still more preferably 6% or more and 20% or less, and even more preferably 8% or more and 18% or less.

The total light transmittance can be measured, for example, by the method described in Examples.

The metallic decorative laminate of the present embodiment may include only a lustrous resin layer and a transparent resin layer described later, but may include other resin layers described later.

When the metallic decorative laminate of the present embodiment is installed on an article to form a metallic article described later, the lustrous resin layer is preferably located on the article side, and the transparent resin layer is preferably the outermost surface of the metal article.

### <Lustrous resin layer>

The lustrous resin layer is a layer that imparts metallic gloss to the metallic decorative laminate, and is required to contain: a resin component (1) containing one or two or more fluorine-based resins; one or two or more coloring matters; and one or two or more lustrous materials.

The lustrous resin layer may contain only the fluorine-based resin as the resin component (1), but the resin component (1) may further contain one or two or more thermoplastic resins and may further contain other components described later. The resin component (1) means not only the fluorine-based resin but also a component excluding the lustrous material contained in the lustrous resin layer.

The lustrous resin layer may contain only the fluorine-based resin, the thermoplastic resin, the coloring matter, and the lustrous material, and may further contain other components described later.

As described above, it is preferable that the article, the lustrous resin layer, and the transparent resin layer are laminated in this order in the metallic article. In particular, it is preferable that the transparent resin layer is the outermost surface of the metallic article, and the transparent resin layer comes into contact with the air, a solvent, a chemical, or the like. Therefore, it can be expected that the chemical resistance and the weather resistance of the transparent resin layer play a large role in improving the chemical resistance and the weather resistance of the metallic article. However, as a result of repeated studies, it has been found that the configuration of the lustrous resin layer that is not in direct contact with chemicals or the like is extremely important for improving the chemical resistance and the weather resistance of the metallic article, and the chemical resistance and the weather resistance differ depending on the lustrous resin layer to be combined even when the same transparent resin layer is used. Since the lustrous resin layer contains the fluorine-based resin and the lustrous material, the chemical resistance and the weather resistance of the metallic article can be improved. Since the lustrous resin layer is a layer that is not in direct contact with outside air or the like, so-called those skilled in the art usually consider that the lustrous resin layer does not contribute to the chemical resistance and the weather resistance of the metallic article. However, it has been found that chemical resistance and weather resistance are improved by adopting a layer configuration as in the present embodiment. The reason for this is not clear, but it is considered that when the lustrous resin layer contains the fluorine-based resin and the lustrous material, aggregation of the fluorine-based resin in the transparent resin layer is suppressed, and the fluorine-based resin is uniformly dispersed in the transparent resin layer, so that the characteristics of chemical resistance and weather resistance of the fluorine-based resin are developed on the layer surface.

In addition, since the lustrous resin layer contains a coloring matter, it has become possible to express a color tone such as black, red, blue, white, deep blue, deep red, orange, or olive having metallic gloss, which has been difficult to express only with the lustrous material. It is also conceivable that the coloring matter is contained in the transparent resin layer to adjust a color tone. However, when the transparent resin layer is the outermost surface of the metallic article as described above, fading due to, for example, oxidation of the coloring matter occurs. Therefore, in order to suppress this fading, it is preferable to contain the coloring matter in the lustrous resin layer.

The amount of the lustrous material increases as the layer thickness of the lustrous resin layer increases, so that designability improves, and the effect on the transparent resin layer is invented. Therefore, the layer thickness of the lustrous resin layer is preferably 5 µm or more, more preferably 8 µm or more, still more preferably 10 µm or more, and even more preferably 13 µm or more in order to improve designability, chemical resistance and weather resistance, and is preferably 100 µm or less, more preferably 60 µm or less, still more preferably 40 µm or less, and even more preferably 35 µm or less in order to improve chemical resistance and moldability.

In order to balance chemical resistance, weather resistance, designability, and moldability, the layer thickness is preferably 5 µm or more and 100 µm or less, more preferably 8 µm or more and 60 µm or less, still more preferably 10 µm or more and 40 µm or less, and even more preferably 13 µm or more and 35 µm or less.

As described above, the lustrous resin layer contains one or two or more fluorine-based resins as the resin component (1), and may further contain one or two or more thermoplastic resins. These may be a mixture (polymer alloy) or a reactant, but are more preferably a mixture (polymer alloy) in order to improve the dispersibility of the lustrous material of the metallic decorative laminate.

Although details of the fluorine-based resin will be described later, only one fluorine-based resin may be used, or two or more fluorine-based resins may be used in combination. Use of only one fluorine-based resin is preferable because a uniform metallic decorative laminate can be easily produced, and use of two or more fluorine-based resins is preferable because physical property values such as the melting point of the resin component (1) can be easily adjusted.

Although details of the thermoplastic resin will be described later, only one thermoplastic resin or a combination of two or more thermoplastic resins may be used as the resin component (1). Use of only one thermoplastic resin is preferable because a uniform metallic decorative laminate can be easily produced, and use of two or more thermoplastic resins is preferable because physical property values such as the melting point of the resin component (1) can be easily adjusted by adjusting the content ratio thereof.

The resin component (1) contained in the lustrous resin layer may contain other components other than the fluorine-based resin. Details of the other components will be described later. In the present disclosure, a component other than the lustrous material contained in the lustrous resin layer is a resin component (1).

When the total of the resin component (1) contained in the lustrous resin layer is 100 mass%, the total content of the fluorine-based resin and the thermoplastic resin when contained is preferably 80.00 mass% or more, more preferably 90.00 mass% or more, still more preferably 95.00 mass% or more, and even more preferably 97.00 mass% or more. The upper limit value is not particularly limited, and is preferably substantially 100 mass%. The term "substantially" means that impurities and the like unintentionally contained are excluded.

When the resin component (1) contained in the lustrous resin layer contains the fluorine-based resin and the thermoplastic resin, the ratio of the content of the fluorine-based resin in the content of the thermoplastic resin (the content (mass%) of the fluorine-based resin/the content (mass%) of the thermoplastic resin) is preferably 0.30 or more and 4.00 or less, more preferably 0.80 or more and 3.00 or less, still more preferably 1.10 or more and 2.00 or less, and even more preferably 1.30 or more and 1.80 or less. Even when an acrylic resin described later is used as the thermoplastic resin, the ratio is preferably 0.30 or more and 4.00 or less, more preferably 0.80 or more and 3.00 or less, still more preferably 1.10 or more and 2.70 or less, and even more preferably 1.30 or more and 2.50 or less.

When the content of the fluorine-based resin is larger than the content of the thermoplastic resin (for example, acrylic resin), dispersibility of the fluorine-based resin in the transparent resin layer is improved, and chemical resistance and weather resistance are improved, which is preferable.

The lustrous resin layer contains one or two or more coloring matters described later and one or two or more lustrous materials described later in addition to the resin component (1), and the lustrous material in the lustrous resin layer is preferably 0.01 parts by mass or more and 20.00 parts by mass or less with respect to 100 parts by mass of the total of the resin component (1). When it is the lower limit value or more, the chemical resistance, the weather resistance, and the designability of the metallic decorative laminate are improved, which is preferable. When it is the upper limit value or less, the moldability is improved, which is preferable. The content is more preferably 0.02 parts by mass or more and 15.00 parts by mass or less, still more preferably 0.03 parts by mass or more and 10.00 parts by mass or less, even more preferably 0.05 parts by mass or more and 5.00 parts by mass or less, most preferably 0.07 parts by mass or more and 3.00 parts by mass or less, and particularly most preferably 0.08 parts by mass or more and 2.00 parts by mass or less.

The coloring matter in the lustrous resin layer is preferably 0.05 parts by mass or more and 20.00 parts by mass or less with respect to 100 parts by mass of the resin component (1). When it is the lower limit value or more, the chemical resistance, the weather resistance, and the designability of the metallic decorative laminate are improved, which is preferable. When it is the upper limit value or less, the moldability is improved, which is preferable. The content is more preferably 0.10 parts by mass or more and 15.00 parts by mass or less, still more preferably 0.20 parts by mass or more and 13.00 parts by mass or less, still more preferably 0.30 parts by mass or more and 10.00 parts by mass or less, still more preferably 0.35 parts by mass or more and 7.00 parts by mass or less, and still more preferably 0.40 parts by mass or more and 5.00 parts by mass or less.

The total amount of the lustrous material and the coloring matter in the lustrous resin layer is preferably 0.05 parts by mass or more and 20.00 parts by mass or less with respect to 100 parts by mass of the resin component (1). When it is the lower limit value or more, the chemical resistance, the weather resistance, and the designability of the metallic decorative laminate are improved, which is preferable. When it is the upper limit value or less, the moldability is improved, which is preferable. The content is more preferably 0.10 parts by mass or more and 15.00 parts by mass or less, still more preferably 0.20 parts by mass or more and 13.00 parts by mass or less, still more preferably 0.30 parts by mass or more and 10.00 parts by mass or less, still more preferably 0.35 parts by mass or more and 7.00 parts by mass or less, and still more preferably 0.40 parts by mass or more and 5.00 parts by mass or less.

### <<Fluorine-based resin>>

The fluorine-based resin is generally added for the purpose of improving chemical resistance, weather resistance, and the like. In the present embodiment, the resin component (1) contains the fluorine-based resin, so that the chemical resistance and the weather resistance of the metallic article using the resin component (1) are improved despite the fact that the lustrous resin layer is not in direct contact with chemicals or the like. Furthermore, when the resin component (1) contains the fluorine-based resin, dispersibility of the lustrous material is improved, and the metallic article using the resin component (1) has uniform metallic gloss.

As the fluorine-based resin, any generally used fluorine-based resin can be used, and preferred examples thereof include polytetrafluoroethylene (PTFE), polychlorotrifluoroethylene (CTFE), polyvinylidene fluoride (PVDF), polyvinyl fluoride (PVF), perfluoroalkoxy fluorine resin (PFA), tetrafluoroethylene-hexafluoropropylene copolymer (FEP), ethylene-tetrafluoroethylene copolymer (ETFE), and ethylene-chlorotrifluoroethylene copolymer (ECTFE). In particular, polyvinylidene fluoride (PVDF) is preferably used as the resin component because a lustrous resin layer having excellent film formability and excellent dispersibility of the lustrous material is formed.

When a thermoplastic resin (acrylic resin) described later is used, the mass average molecular weight (Mw) of the fluorine-based resin is preferably 800 or more and 5,000 or less, more preferably 1,000 or more and 3,000 or less, still more preferably 1,300 or more and 2,000 or less, and still more preferably 1,500 or more and 1,700 or less, in order to facilitate formation of a polymer alloy.

The polydispersity (Mw/Mn) of the fluorine-based resin is preferably 0.5 or more and 5.0 or less, more preferably 0.8 or more and 2.5 or less, still more preferably 1.0 or more and 1.8 or less, and still more preferably 1.2 or more and 1.4 or less, in order to facilitate formation of a polymer alloy with an acrylic resin described later.

The content of the fluorine-based resin in the resin component (1) in the lustrous resin layer is preferably more than 30.00 mass% or more and 80.00 mass% or less, more preferably 35.00 mass% or more and 80.00 mass% or less, still more preferably 40.00 mass% or more and 75.00 mass% or less, still more preferably 50.00 mass% or more and 70.00 mass% or less, and still more preferably 55.00 mass% or more and 65.00 mass% or less.

### <<Coloring matter>>

The coloring matter is dispersed in the resin composition to express a design having a color tone that cannot be expressed only by the later-described lustrous material, and excludes the later-described lustrous material.

The coloring matter does not reflect external light (incident light) but absorbs light of a specific wavelength to adjust the hue of the lustrous resin layer.

The coloring matter contained in the lustrous resin layer is generally used in the present technical field, is not particularly limited as long as the metallic decorative laminate develops a desired metallic design, and may be a dye or a pigment, may be an inorganic compound or an organic compound, or may be a natural coloring matter or a synthetic coloring matter as long as it absorbs visible light. In particular, a synthetic pigment is preferable when the metallic decorative laminate is used outdoors, and weather resistance is required, and an organic pigment is preferable for improving coloration. The coloring matter preferably contains an inorganic pigment or an organic pigment, and is preferably an inorganic pigment or an organic pigment. More specifically, preferred examples thereof include inorganic pigments such as titanium white (titanium oxide), zinc white, rouge, vermilion, ultramarine, cobalt blue, titanium yellow, chrome yellow, and carbon black; and organic pigments (including dyes) such as isoindolinone, Hansa Yellow A, quinacridone, permanent red 4R, phthalocyanine blue, indanthrene blue RS, and aniline black.

### <<Lustrous material>>

The lustrous material is not particularly limited as long as it is dispersed in the resin composition to reflect external light (incident light) to impart metallic gloss to the lustrous resin layer to develop the designability of the metallic decorative laminate. The lustrous material may be an inorganic pigment or an organic pigment and may be a natural material or a synthetic material. However, an inorganic pigment is preferable in order to improve the external light reflection performance.

The surface of the lustrous material may be coated. The coating may be a coating with an organic substance such as silicone or a coating with an inorganic substance such as silica gel or alumina.

The lustrous material preferably contains at least one material selected from scaly or flaky metal, scaly or flaky alloy, scaly or flaky metal oxide, scaly or flaky mica, glass flakes, and a film pulverized body. Any one may be used as long as the resin composition develops lustrous property, but scaly or flaky metal, scaly or flaky mica, or a film pulverized body is more preferable, scaly or flaky metal or scaly or flaky mica is still more preferable, and scaly or flaky metal is still more preferable, for example, for improving availability and designability.

The scaly or flaky metal is a particle obtained by making metal powder into a flaky shape. As the metal, those usually used for scaly or flaky metal are preferably used, and more preferred examples thereof include aluminum, iron, copper, nickel, zinc, gold, silver, oxides of these metals, and alloys containing these metals. Examples of the scaly or flaky metal include aluminum flakes, stainless steel flakes, copper flakes, nickel flakes, and the like, and in order to obtain a metallic decorative laminate excellent in metallic designability, the scaly or flaky metal is preferably flakes of aluminum or an alloy thereof, and more preferably aluminum flakes.

Examples of the scaly or flaky mica include a white pearl pigment, an interference pearl pigment, and a colored pearl pigment.

The white pearl pigment is obtained by covering a scaly base material such as mica, aluminum, or glass with a covering layer made of a colorless high refractive index material such as titanium dioxide, and the layer thickness of the covering layer is preferably about 0.1 µm or more and 0.15 µm or less.

The interference pearl pigment has a configuration of being covered with a covering layer made of a colorless high refractive index material such as titanium dioxide, and the layer thickness of the covering layer is preferably more than 0.15 µm.

It is preferable that the lustrous material is sufficiently uniformly dispersed in the resin component in a lustrous resin layer 30 in Fig. 2, and is oriented such that a thickness direction 210 of the lustrous material is substantially parallel to the thickness direction 100. Although Fig. 2 schematically illustrates the lustrous material as a disk shape, the lustrous material is not limited thereto. Further, the longest length in the planar direction (a particle diameter direction 220 of the lustrous material) of a lustrous material 200 is defined as a particle diameter 221 of the lustrous material, and the average thickness in the thickness direction of the lustrous material perpendicular to the planar direction is defined as a thickness 211 of the lustrous material. These are average values obtained by randomly sampling 20 lustrous materials and measuring them under an optical microscope. The particle diameter 221 of the lustrous material can be substituted by the volume average particle diameter (D₅₀) described in Examples. The particle diameter 221 (D₅₀) of the lustrous material is preferably 3 µm or more, more preferably 4 µm or more, and still more preferably 5 µm or more in order to ease availability and develop a metallic designability, and is preferably 50 µm or less, more preferably 30 µm or less, still more preferably 20 µm or less, still more preferably 15 µm or less, and still more preferably 10 µm or less in order to improve the amount of transmitted light and improve chemical resistance and weather resistance. The volume average particle diameter (D₅₀) can be measured by a conventional method.

In order to balance chemical resistance, weather resistance, designability, and moldability, the particle diameter is preferably 3 µm or more and 50 µm or less, more preferably 3 µm or more and 30 µm or less, still more preferably 4 µm or more and 20 µm or less, still more preferably 4 µm or more and 15 µm or less, and still more preferably 5 µm or more and 10 µm or less.

The thickness 211 of the lustrous material is preferably 0.05 µm or more and 1.00 µm or less, more preferably 0.10 µm or more and 0.80 µm or less, and still more preferably 0.10 µm or more and 0.50 µm or less in order to achieve chemical resistance, weather resistance, designability, and moldability at the same time.

The ratio (= particle diameter/thickness) of the particle diameter 221 (D₅₀) of the lustrous material to the thickness 211 of the lustrous material is preferably 3 or more and 200 or less, more preferably 5 or more and 150 or less, still more preferably 8 or more and 120 or less, and still more preferably 10 or more and 100 or less.

The fluorine-based resin has a property of easily aggregating. By aggregating, it becomes easy to take a fine particulate shape (hereinafter, referred to as an aggregate). When this aggregate is formed, the compatibility with other resin components becomes poor, and there is a tendency that the fluorine-based resin is prevented from being uniformly present. Even when the aggregate is pulverized and then stirred with, for example, the thermoplastic resin, aggregation occurs again in the resin composition, and the resin composition becomes a non-uniform dispersion state. When the resin composition is applied, aggregates tend to be nonuniformly present on the application surface. In such a non-uniform state, the properties of the fluorine-based resin cannot be sufficiently developed. In order to prevent the aggregates from growing, a method of adding a nucleating agent described later is known. The addition of the nucleating agent has an effect of suppressing the growth of the particle diameter even when aggregates are formed. However, when the addition amount of the nucleating agent is increased, weather resistance and moldability are deteriorated. The lustrous material was added to improve designability, but the effect of suppressing the growth of aggregates of the fluorine-based resin was confirmed when the lustrous material was used together with the fluorine-based resin. In addition, since the fluorine-based resin improves the dispersibility of the lustrous material, the lustrous resin layer has a uniform layer structure due to a synergistic effect of using both the fluorine-based resin and the lustrous material.

### <<Thermoplastic resin>>

The lustrous resin layer preferably further contains one or two or more thermoplastic resins.

The total content of the thermoplastic resin in the resin component (1) in the lustrous resin layer is preferably 20.00 mass% or more and less than 70.00 mass%, more preferably 25.00 mass% or more and 60.00 mass% or less, still more preferably 30.00 mass% or more and 50.00 mass% or less, and even more preferably 35.00 mass% or more and 45.00 mass% or less.

Examples of the thermoplastic resin include a polyolefin-based resin, a polyester-based resin, and a polystyrene-based resin, and a polyolefin-based resin is preferable because it has good moldability.

The mass average molecular weight (Mw) of the polyolefin-based resin is preferably 30,000 or more and 500,000 or less, more preferably 50,000 or more and 300,000 or less, still more preferably 70,000 or more and 200,000 or less, and still more preferably 90,000 or more and 100,000 or less in order to improve impact resistance.

The polydispersity (Mw/Mn) of the polyolefin-based resin is preferably 1.5 or more and 5.0 or less, more preferably 1.6 or more and 4.0 or less, still more preferably 1.7 or more and 3.0 or less, and still more preferably 1.9 or more and 2.2 or less in order to improve impact resistance.

The glass transition point (Tg) of the polyolefin-based resin is preferably 100°C or higher, more preferably 108°C or higher, still more preferably 115°C or higher, and still more preferably 117°C or higher in order to improve impact resistance.

The upper limit of Tg is not particularly limited, but is preferably 150°C or lower, more preferably 140°C or lower, still more preferably 130°C or lower, and still more preferably 125°C or lower from the viewpoint of moldability.

### (Acrylic resin)

The polyolefin-based resin is preferably an acrylic resin. As the acrylic resin, any acrylic resin used as a polymer or copolymer acrylic resin of acrylic acid and a derivative such as an ester thereof as well as a methacrylic acid derivative such as methyl methacrylate can be used. More specifically, polyethyl methacrylate (PEMA), polybutyl methacrylate (PBMA), polycyclohexyl methacrylate (PCHMA), polyethylhexyl methacrylate (PEHMA) and the like are preferable, and in particular, a polymethyl methacrylate resin (PMMA) is useful when used as a resin component because it has high transparency and excellent scratch resistance due to high hardness, and further is thermoplastic and capable of being processed into a complicated shape.

The mass average molecular weight (Mw) of the acrylic resin is preferably 30,000 or more and 500,000 or less, more preferably 50,000 or more and 300,000 or less, still more preferably 70,000 or more and 200,000 or less, and still more preferably 90,000 or more and 100,000 or less in order to facilitate formation of a polymer alloy with the fluorine-based resin.

The polydispersity (Mw/Mn) of the acrylic resin is preferably 1.5 or more and 5.0 or less, more preferably 1.6 or more and 4.0 or less, still more preferably 1.7 or more and 3.0 or less, and still more preferably 1.9 or more and 2.2 or less in order to facilitate formation of a polymer alloy with the fluorine-based resin.

The glass transition point (Tg) of the acrylic resin is preferably 100°C or higher, more preferably 108°C or higher, still more preferably 115°C or higher, and still more preferably 117°C or higher in order to form a resin component with the fluorine-based resin more uniformly and suppress crystallinity of the fluorine-based resin.

The upper limit of Tg is not particularly limited, but is preferably 150°C or lower, more preferably 140°C or lower, still more preferably 130°C or lower, and still more preferably 125°C or lower from the viewpoint of processability.

The acrylic resin preferably has an imide skeleton in the structure thereof in order to achieve the above-described Tg range.

### <<Other components>>

As the other components, a nucleating agent, an ultraviolet absorber, an antioxidant, a pigment, an antistatic agent, a leveling agent, an antifoaming agent, and the like can be used as necessary.

### (Nucleating agent)

Use of the nucleating agent as described above is preferable because aggregation of the lustrous resin layer can be controlled. The fluorine-based resin is a crystalline resin and is known to crystallize in the resin layer. When crystals are generated by aggregation in the resin layer, and the crystallite diameter grows, the resin layer may be clouded due to scattering by the crystals. Use of the nucleating agent is preferable because the crystallite diameter can be reduced. The nucleating agent can be variously selected depending on the resin component to be used, but it is preferable to use acryl-modified polytetrafluoroethylene because the crystallite diameter of the fluorine-based resin can be controlled.

As the ultraviolet absorber, the antioxidant, the pigment, the antistatic agent, the leveling agent, and the antifoaming agent, general-purpose compounds can be used. The ultraviolet absorber is preferably a benzotriazole-based compound.

### <Transparent resin layer>

The transparent resin layer is a layer laminated on a surface opposite to an article from the lustrous resin layer, and is preferably a layer that is the outermost surface when a metallic article is formed. The transparent resin layer is required to contain a resin component (2) containing one or two or more fluorine-based resins.

The transparent resin layer and the lustrous resin layer differ depending on whether or not the lustrous material is contained.

The resin component (2) may contain only the fluorine-based resin, may further contain one or two or more of the thermoplastic resins, or may contain only the fluorine-based resin and the thermoplastic resin. The resin component (2) may further contain the above-described other components.

In the metallic decorative laminate, external light is transmitted through the transparent resin layer, a part of the external light is reflected by the metallic resin layer and is transmitted through the transparent resin layer again, so that a viewer of the metallic article recognizes metallic gloss. For this reason, the transparent resin layer is required to have transparency, and the total light transmittance thereof is preferably 80% or more, more preferably 90% or more, still more preferably 95% or more, and still more preferably 98% or more. The upper limit thereof is not particularly limited as long as the metallic design of the metallic decorative laminate of the present disclosure is exhibited. The total light transmittance can be measured, for example, by the method described in Examples.

The transparent resin layer is preferably the outermost surface when the metallic article is formed as described above. Therefore, the lower limit value of the layer thickness is preferably larger in order to improve chemical resistance and weather resistance, and the upper limit value of the layer thickness is preferably smaller in order to improve designability and moldability. The layer thickness is preferably 5 µm or more, more preferably 10 µm or more, still more preferably 20 µm or more, and even more preferably 25 µm or more, and is preferably 100 µm or less, more preferably 60 µm or less, still more preferably 40 µm or less, and even more preferably 35 µm or less in order to improve chemical resistance and moldability.

In order to balance chemical resistance, weather resistance, designability, and moldability, the layer thickness is preferably 5 µm or more and 100 µm or less, more preferably 10 µm or more and 60 µm or less, still more preferably 20 µm or more and 40 µm or less, and even more preferably 25 µm or more and 35 µm or less.

When the lustrous resin layer is used as the outermost surface of the metallic decorative laminate, the surface may be subjected to various patterns by embossing or the like, or fine irregularities may be provided to impart a matte feeling, as necessary. In addition, a hairline design may be imparted by hairline processing.

As the fluorine-based resin, the thermoplastic resin, and the other components used in the transparent resin layer, the same ones as those used in the resin component (1) can be used, and the content of each component is also the same as that of the resin component (1).

### <Other layer configurations>

The metallic decorative laminate may further include other layers.

As the other layers, a surface protective layer, a primer layer, an adhesive layer, and the like may be included as necessary.

As the surface protective layer and the primer layer, a general-purpose film such as a urethane resin, a polyester resin, an acrylic resin, an acrylic urethane resin, or a vinyl chloride-vinyl acetate copolymer resin can be used, and as the adhesive layer, a polyurethane-based adhesive layer is preferable in order to obtain sufficient transparency and adhesive strength.

### [Intermediate laminate]

The intermediate laminate of the present embodiment is required to further include a substrate described later on the transparent resin layer side of the metallic decorative laminate.

The intermediate laminate is produced when the metallic decorative laminate or the like is produced. Although a method for producing each laminate will be described later, the metallic decorative laminate can be easily produced by laminating the transparent resin layer and the lustrous resin layer on a substrate described later.

The intermediate laminate is not limited as long as it includes the metallic laminate and the substrate, but may include only the metallic laminate and the substrate or may further include the above-described other layers.

The layer thickness of the intermediate laminate is appropriately adjusted, and is preferably 30 µm or more and 200 µm or less, more preferably 60 µm or more and 160 µm or less, still more preferably 80 µm or more and 140 µm or less, and even more preferably 100 µm or more and 120 µm or less.

### <Substrate>

The substrate is used for applying a coating liquid for forming a transparent resin layer on the substrate when a metallic decorative laminate is produced as described later, and is a layer for protecting the outermost surface on the transparent resin layer side when a multilayer laminate described later is transported, stored, or the like. Since it is peeled off at any stage of the process of producing a metallic article, it also serves as a peeling layer.

Any substrate used as a substrate in the art can be used, and the substrate can be appropriately selected from a polyethylene-based substrate, a polyester-based substrate (including a polyethylene terephthalate (PET) substrate), a polycarbonate-based substrate, and the like. PET is more preferable from the viewpoint of requirements such as handleability and availability at the time of production.

The thickness of the substrate is not limited as long as it is in a range that does not interfere in the production process, and is generally 10 µm or more and 150 µm or less.

### [Multilayer laminate]

The multilayer laminate is required to include a base layer on the lustrous resin layer side of the intermediate laminate. An adhesive layer may be further provided between the intermediate laminate and the base layer. The intermediate laminate and the base layer are preferably bonded by an adhesive layer. The above-described other layers may be further included.

The layer thickness of the multilayer laminate is appropriately adjusted.

The multilayer laminate is preferably the following (1) to (4), more preferably (1) and (2), and still more preferably (2) from the viewpoint of facilitating the production of each laminate and a metallic article. Note that "/" means an interlayer. Each interlayer may not be clear due to partial penetration or the like, and it can be said that each interlayer is a configuration for production.
(1) Substrate/transparent resin layer/lustrous resin layer/base layer
(2) Substrate/transparent resin layer/lustrous resin layer/adhesive layer/base layer
(3) Substrate/adhesive layer/transparent resin layer/lustrous resin layer/base layer
(4) Substrate/adhesive layer/transparent resin layer/lustrous resin layer/adhesive layer/base layer

### <Base Layer>

As the base layer, a material for the base layer can be appropriately selected, in consideration of an influence on designability, from resins such as a polyvinyl chloride-based resin, a polyolefin-based resin, a polystyrene-based resin, a polyacryl-based resin, a polyurethane-based resin, a polyamide-based resin, a polycarbonate-based resin, and an acrylonitrile-butadiene-styrene copolymer (ABS resin) depending on the application in consideration of heat resistance to a temperature at the time of molding into a lustrous decorative molded article, compatibility with an injection molding resin and the like in insert injection molding, and the like.

The layer thickness of the base layer can be, for example, 50 µm to 1000 µm so as to be a general thickness as a decorative laminate. When the layer thickness of the base layer is in the above-described range, defects such as wrinkles can be suppressed during film formation, and breakage or the like of the metallic decorative laminate can be suppressed during molding processing of the metallic article, which is preferable. When the layer thickness of the base layer exceeds 1000 µm, moldability of the metallic article may be deteriorated.

It is also preferred that the base layer contains a pigment. As a result, influence of the color of an article on the metallic article can be suppressed, and the color gamut can be expressed, so that designability can be improved.

### [Decorative laminate]

The decorative laminate is obtained by peeling the substrate (peeling layer) from the multilayer laminate, and the base layer is required to be included on the lustrous resin layer side of the metallic decorative laminate.

As described later, a metallic article is produced using the decorative laminate.

The base layer may contain a pigment.

### [Metallic article]

The metallic article of the present embodiment is required to include the metallic decorative laminate.

The metallic article of the present embodiment is produced using the metallic decorative laminate by, for example, a producing method described later, and is molded into a desired shape according to a purpose. For example, the metallic article is used for housings of smartphones and mobile phones; automobile bumpers, emblems, door mirror housings, front grilles, door handles, center wheel caps, emblems, ornaments, garnishes, lamp reflectors, center consoles, instrument panels, and the like; housings and decorative parts of home appliances such as personal computers, TV sets, washing machines, and refrigerators; housings and decorative parts of pachinko machines, slot machines, game machines, and the like; or suitcases and the like as general applications, and can impart metallic decorativeness and designability instead of plating and metal materials.

In particular, the metallic decorative laminate of the present embodiment not only imparts a metallic design to an article, but also imparts chemical resistance and weather resistance to the article. In the present disclosure, an "article" is a precursor of a metallic article and becomes a metallic article by being decorated with the decorative laminate.

The metallic article of the present embodiment may have another configuration in addition to the above-described configuration. For example, a release paper, a protective film, or the like can be provided on the surface of a protective layer or a substrate layer in order to maintain the surface of the protective layer or the substrate layer in a clean state and prevent contamination before the metallic article of the present embodiment is used.

### [Method for producing intermediate laminate, multilayer laminate, decorative laminate, and metallic article]

The metallic decorative laminate of the present embodiment is commonly included in an intermediate laminate, a multilayer laminate, a decorative laminate, and a metallic article, and is formed in the process of producing the intermediate laminate.

The method for producing the intermediate laminate of the present embodiment is required to include, in this order, applying a coating liquid containing one or two or more of the fluorine-based resins, applying a coating liquid containing one or two or more of the fluorine-based resins, one or two or more coloring matters, and one or two or more of the lustrous materials, and heating.

Since the fluorine-based resin, the lustrous material, the thermoplastic resin, the other components, the metallic decorative laminate, the intermediate laminate, the multilayer laminate, the decorative laminate, and the metallic article have already been described, descriptions thereof are omitted.

### (Coating liquid containing one or two or more of the fluorine-based resins)

The coating liquid containing the one or two or more of the fluorine-based resins is a coating liquid for forming a transparent resin layer, and may further contain the thermoplastic resin and/or other components.

The coating liquid may further contain a solvent, and may be a uniform solvent or a slurry.

### (Solvent)

The solvent may be any solvent that is generally used as a solvent in the art. As the solvent, polar solvents such as ester-based solvents, ether-based solvents, and ketone-based solvents; nonpolar solvents such as hydrocarbon-based solvents and aromatic solvents; alcohol-based solvents such as methanol, ethanol, and isopropyl alcohol can be selected, and polar solvents such as ester-based solvents, ether-based solvents, and ketone-based solvents are preferable.

In the method for producing a metallic decorative laminate of the present embodiment, it is preferable that the solvent exhibits a poor solvent property to the fluorine-based resin and a good solvent property to the acrylic resin. If the fluorine-based resin is not dissolved in the coating liquid before heating described later, the fluorine-based resin does not react with the acrylic resin before heating, and lumps due to the reaction product of the fluorine-based resin and the acrylic resin are not generated in the coating liquid, which is preferable. Since such lumps are not generated, coating unevenness or the like does not occur at the time of applying, and a uniform lustrous resin layer can be produced. A preferable example of the solvent having such properties is butyl carbitol acetate.

When the solvent is used, the amount thereof is preferably 80.0 parts by mass or more and 500.0 parts by mass or less, more preferably 100.0 parts by mass or more and 300.0 parts by mass or less, and still more preferably 150.0 parts by mass or more and 200.0 parts by mass or less, with respect to 100 parts by mass of the total of the fluorine-based resin and the acrylic resin, in order to shorten the treatment time of heating described later and improve the applying property of the coating liquid to the substrate.

### (Coating liquid containing one or two or more of the fluorine-based resins, one or two or more coloring matters, and one or two or more of the lustrous materials)

The coating liquid containing the one or two or more of the fluorine-based resins, one or two or more coloring matters, and one or two or more of the lustrous materials is a coating liquid for forming a lustrous resin layer, and may further contain the thermoplastic resin and/or other components.

The coating liquid may further contain the solvent, and may be a uniform solvent or a slurry.

### <Applying>

The application of the coating liquid can be performed by a known means such as a gravure coater, a reverse coater, a die coater, a knife coater, or a roll coater on the substrate or on the resin layer formed on the substrate.

### <Heating>

The heating may be started before completion of the application or may be performed after complete completion of the application, and is preferably performed in a state where the coating liquid is on the substrate. The heating includes a case where the application is performed after the substrate is heated in advance, and heating is further performed.

When the solvent is used for the coating liquid, the solvent is distilled off by the heating. By heating the resin component to Tg or higher of the resin component contained therein, the resin component can be mixed with the fluorine-based resin. This is preferable because the crystallite diameter of the fluorine-based resin does not grow, deposition of the fluorine-based resin from the resin component is suppressed, and the lustrous material is also uniformly dispersed.

The heating temperature can be appropriately selected depending on the heating time, the fluorine-based resin, the coloring matter, the thermoplastic resin, the other components, the solvent, the substrate, and the like to be used, and is preferably 100°C or higher, more preferably 150°C or higher, and still more preferably 170°C or higher, and preferably 250°C or lower, more preferably 220°C or lower, and still more preferably 200°C or lower in order to obtain a metallic decorative laminate which is excellent in designability and achieves chemical resistance, weather resistance, and moldability.

As the heating method, a heating method used in the art can be appropriately selected depending on the shape, size, and the like of an object to be heated.

The heating time can be appropriately selected depending on the size of a laminate to be produced, the heating temperature, the fluorine-based resin, the thermoplastic resin, the solvent, and the substrate to be used, and the like, and is preferably 30 seconds or more and more preferably 1 minute or more, and preferably 5 minutes or less and more preferably 3 minutes or less in order to obtain a metallic decorative laminate excellent in designability and excellent in millimeter wave transmittance.

### <Peeling substrate>

The method for producing a decorative laminate of the present embodiment is required to include peeling the substrate from the multilayer laminate.

A metallic decorative laminate produced by the method for producing a metallic decorative laminate is formed on a substrate. Therefore, the decorative laminate is obtained by peeling the substrate (peeling layer).

The peeling method is not particularly limited as long as it is a method commonly used in the art.

### <Method for producing metallic article>

The metallic article of the present embodiment can be produced, for example, by the following method.

The production method includes a molding step of setting the surface temperature of the decorative laminate to 150°C to 200°C, bringing the decorative laminate into close contact with a mold such that the base film side of the decorative laminate is on the article side, and molding the decorative laminate on the surface of the article to obtain a metallic article.

### (Molding step)

When the surface temperature of the decorative laminate is 150°C to 200°C in order to thermally mold the decorative laminate, the decorative laminate is not drawn down during molding, and a whitening phenomenon or the like does not occur, so that good moldability can be satisfied. When the surface temperature is 150°C or higher, the decorative laminate is sufficiently softened, and processing and molding are not obstructed by sagging and deformation of the decorative laminate due to a drawdown phenomenon. In addition, when the surface temperature is 200°C or lower, it is possible to prevent a case where molding becomes difficult because the decorative laminate is excessively softened due to being in a molten state and a case where a whitening phenomenon or the like is likely to occur.

The shape of the mold with which the decorative laminate is brought into close contact may be any shape such that the metallic article can be molded into a desired shape. For example, a mold such as a male mold or a female mold having a brass surface plated with chromium can be used. In addition, the temperature of the mold can be set to any temperature in consideration of control of the surface temperature of the decorative laminate and control of the cooling condition of the metallic article after the molding step.

As a method for bringing the decorative laminate into close contact with a mold, any method can be adopted in consideration of ease of molding, cost, and the like, such as straight molding using a female mold, drape molding using a male mold, and plug assist molding using a plug (auxiliary mold). In addition, a vacuum molding method in which the metallic decorative laminate is sucked into a mold, or a pressure molding method in which the metallic decorative laminate is brought into close contact with a mold by a compressed air pressure can be adopted. For example, when the metallic decorative laminate is brought into close contact with a mold by vacuum and/or compressed air, adhesion between the decorative laminate and the mold is improved, so that the decorative laminate can be processed into a more precise shape.

### (Clamping step)

The method for producing a metallic article may include a clamping step of clamping the decorative laminate before the molding step. Through this step, the decorative laminate can be adjusted and fixed so as not to be loosened during molding. The clamping can be performed, for example, by gripping both ends of the decorative laminate using, for example, a plurality of gripping means capable of gripping both surfaces of the decorative laminate. Gripping of the decorative laminate is not limited to both ends of the decorative laminate, and any part of the decorative laminate can be gripped. Usually, when a metallic article is continuously produced, both ends in the width direction of the decorative laminate can be gripped. When a metallic article is produced in batch using a quadrangular product obtained by cutting the decorative laminate to a predetermined length, the end portions of the four sides can be gripped by upper and lower frames.

### (Heating step)

The method for producing a metallic article may include a heating step of heating the decorative laminate after the clamping step. For example, after the decorative laminate at room temperature is clamped and adjusted so as not to be loosened, a plurality of heaters or the like is used as a heating unit, and these heaters or the like are disposed above and below the decorative laminate, so that both surfaces of the decorative laminate can be simultaneously and uniformly heated. By this heating step, the surface temperature of the decorative laminate can be controlled to 150°C to 200°C.

### (Other Steps)

The method for producing a metallic article may further include other steps in addition to the above-described steps. For example, a bonding step of bonding a protective film or the like to the surface of the protective layer or the substrate layer can be included in order to maintain the surface of the protective layer or the substrate layer in a clean state and prevent contamination until the metallic article is processed in the next step. Further, after the metallic article is inserted into an injection molding mold, insert injection molding of injecting a resin is performed, and the surface of the injection molded product can be decorated.

A metallic decorative laminate, an intermediate laminate, a multilayer laminate, a decorative laminate, and a metallic article which include the metallic decorative laminate, and methods for producing the decorative laminate and the intermediate laminate of the present embodiment are preferably [1] to [13] described below.
[1] A metallic decorative laminate including:
   a lustrous resin layer containing a resin component (1), one or two or more coloring matters, and one or two or more lustrous materials, the resin component (1) containing one or two or more fluorine-based resins; and
   a transparent resin layer containing a resin component (2) containing one or two or more fluorine-based resins.
[2] The metallic decorative laminate according to [1], in which the resin component (1) further contains one or two or more thermoplastic resins.
[3] The metallic decorative laminate according to [2], in which the lustrous material in the lustrous resin layer is 0.01 parts by mass or more and 20.00 parts by mass or less with respect to 100 parts by mass of the resin component (1).
[4] The metallic decorative laminate according to any one of [1] to [3], in which the lustrous material contains at least one material selected from scaly or flaky metal, scaly or flaky alloy, scaly or flaky metal oxide, scaly or flaky mica, glass flakes, and a film pulverized body.
[5] The metallic decorative laminate according to any one of [1] to [4], in which the coloring matter in the lustrous resin layer is 0.05 parts by mass or more and 20.00 parts by mass or less with respect to 100 parts by mass of the resin component (1).
[6] The metallic decorative laminate according to any one of [1] to [5], in which the coloring matter contains an inorganic pigment or an organic pigment.
[7] The metallic decorative laminate according to any one of [1] to [7], in which the resin component (2) further contains one or two or more thermoplastic resins.
[8] An intermediate laminate including a substrate on a transparent resin layer side of the metallic decorative laminate according to any one of [1] to [7].
[9] A multilayer laminate including a base layer on a lustrous resin layer side of the intermediate laminate according to [8].
[10] A decorative laminate including a base layer on a lustrous resin layer side of the metallic decorative laminate according to any one of [1] to [7].
[11] A metallic article including the metallic decorative laminate according to any one of [1] to [7].
[12] A method for producing the intermediate laminate according to [8], including, in this order:
   applying a coating liquid containing one or two or more fluorine-based resins;
   applying a coating liquid containing one or two or more fluorine-based resins, one or two or more coloring matters, and one or two or more lustrous materials; and
   heating the coating liquid.
[13] The method for producing the decorative laminate according to [10], including peeling the substrate from the multilayer laminate according to [9].

### EXAMPLES

Hereinafter, the present invention will be described more specifically with reference to Examples. However, the present invention is not limited to the following Examples at all.

### (Evaluation method)

### 1. Chemical resistance evaluation

Chemical resistance evaluation was performed using a commercially available brake fluid (manufactured by XX Co., Ltd., product name: XX) containing polyethylene glycol monoether as a main component assuming use in a four-wheeled vehicle, a two-wheeled vehicle, a vacuum pump, and the like. The decorative laminate of 25 cm × 25 cm obtained in each of Examples and Comparative Examples was prepared as an inspection sample, and 1 mL of the brake fluid was dropped at 25°C onto the transparent resin layer side of the decorative laminate at 9 points of 3 × 3 using a dropper. After left to stand for 5 hours, the brake fluid was washed with toluene and left at 25°C for 1 hour to confirm that toluene was dried, and then the surface state was visually observed and evaluated as the following A to D.
A: No change from before the test was observed at all 9 points.
B: A dropping mark of the brake fluid can be confirmed at less than 4 points.
C: A dropping mark of the brake fluid can be confirmed at 4 points or more and less than 8 points.
D: A dropping mark of the brake fluid can be confirmed at 8 or more points.

### 2. Weather resistance evaluation

A xenon weather meter SX75 7.5 kW (manufactured by Suga Test Instruments Co., Ltd.) was used. The treatment conditions were a black panel temperature of 63 ± 2°C, a humidity of 50%RH, a rainfall period (non-rainfall time/rainfall time) of 102 min/18 min, an illuminance of 180 W/m², an in-tank temperature of 25 to 35°C, and 500 MJ/m². The color difference of the sample surface on the transparent resin layer side of the decorative laminate obtained in each of Examples and Comparative Examples before and after the treatment was measured using a color difference meter CM-3600A (manufactured by Konica Minolta, Inc.) and evaluated as the following A to C.
A: When ΔE* = 3.0 or less, the sample was evaluated as having very good weather resistance.
B: When ΔE* was more than 3.0 and 5.0 or less, the sample was evaluated as having weather resistance.
C: When ΔE* was more than 5.0, the sample was evaluated as having no weather resistance.

### 3. Heat resistance evaluation

The decorative laminate obtained in each of Examples and Comparative Examples was allowed to stand in an environment at 100°C for 500 hours, and the color difference of the sample surface on the transparent resin layer side of the decorative laminate before and after the test was measured using a color difference meter CM-3600A (manufactured by Konica Minolta, Inc.) and evaluated as the following A to C.
A: When Δb* = 1.0 or less, and there were no defects such as peeling of the decorative sheet, the decorative sheet was evaluated as having very high heat resistance.
B: When Δb* was more than 1.0 and 3.0 or less, and there were few defects such as peeling of the decorative sheet, the decorative sheet was evaluated as having heat resistance.
C: When Δb* was more than 5.0, and a large defect such as peeling of the decorative sheet was confirmed, the decorative sheet was evaluated as having no heat resistance.

### 4. Designability evaluation

The decorative laminate obtained in each of Examples and Comparative Examples was visually observed from the transparent resin layer side, and evaluated as the following A or B.
A: A metallic design is exhibited.
B: A metallic design is not exhibited, or a matte look is exhibited.

### 5. Total light transmittance

The total light transmittance of the decorative laminate obtained in each of Examples and Comparative Examples was measured in accordance with JIS K7375:2008 using a spectrophotometer (UH4150 manufactured by Hitachi High-Tech Science Corporation).

### 6. Post-molding design evaluation

The metallic article prepared using the decorative laminate obtained in each of Examples and Comparative Examples was visually observed and evaluated.

### 7. Moldability evaluation

For the metallic article prepared using the decorative laminate obtained in each of Examples and Comparative Examples, the presence or absence of cloudiness of the stretched portion (stretching to 200% of the laminate before stretching) of the laminate in the corner portion of the mold after the molding step was evaluated as moldability by visual observation.

### (Materials used)

### (Fluorine-based resin (Kyanr 301 manufactured by Arkema K.K.))

Number average molecular weight (Mn) 1,200
Weight average molecular weight (Mw) 1,600
Z average molecular weight (Mz) 1,900
Polydispersity (Mw/Mn) 1.3
Peak area ratio 14%

### (Acrylic resin (manufactured by Asahi Kasei Corporation, SK540))

Number average molecular weight (Mn) 46,000
Weight average molecular weight (Mw) 93,000
Z average molecular weight (Mz) 150,000
Polydispersity (Mw/Mn) 2.0
Peak area ratio 86%

### (Coloring matter 1)

White pigment
MHI White #148 (manufactured by Mikuni Color Ltd.)

### (Coloring matter 2)

Black pigment
MHI Black #C004 (manufactured by Mikuni Color Ltd.)

### (Coloring matter 3)

Blue pigment
MHI Blue #C362M (manufactured by Mikuni Color Ltd.)

### (Coloring matter 4)

Red pigment
MHI Red #CC361 (manufactured by Mikuni Color Ltd.)

### (Lustrous material 1)

Pearl pigment
TWINCLEPEARL SXC-SO (volume average particle diameter (D₅₀): 22 µm, manufactured by Nihon Koken Kogyo Co., Ltd.)

### (Lustrous material 2)

Aluminum flakes
GX40A (volume average particle diameter (D₅₀): 19 µm, manufactured by Asahi Kasei Corporation)

### (Lustrous material 3)

Pearl pigment
TWINCLEPEARL (registered trademark) BXC-SO (volume average particle diameter (D₅₀): 22 µm, manufactured by Nihon Koken Kogyo Co., Ltd.)

### (Example 1)

### <Production of intermediate laminate including metallic decorative laminate>

### (Film formation of transparent resin layer)

A coating liquid for a transparent resin layer described later was applied onto a substrate (PET film (G2000 (manufactured by Toyobo Co., Ltd.))). The application amount was adjusted such that the film thickness of the lustrous resin layer after heating was 30 µm.

Immediately after the application, the substrate was heated at 180°C for 2 minutes to form a transparent resin layer on the substrate. Thereafter, the obtained product was cooled to room temperature.

### ((Coating liquid for transparent resin layer))

To 37.45 g of butyl carbitol acetate (manufactured by Sankyo Kasei Sangyo Co., Ltd.), 8.75 g of an acrylic resin (SK540 manufactured by Asahi Kasei Corporation) was added. The mixture was stirred at room temperature to obtain a uniform solution. Further, other components (0.57 g of ultraviolet absorber (Tinuvin900 manufactured by BASF Japan Ltd.) and 0.06 g of a nucleating agent (A-3000 manufactured by Mitsubishi Chemical Corporation)) and 13.16 g of a fluorine-based resin (Kyanr 301 manufactured by Arkema K.K.) were added, and the resulting mixture was further stirred to obtain a coating liquid for a transparent resin layer containing the resin component (2).

The contents of the acrylic resin, the fluorine-based resin, and the other components in a resin component (2) used in Examples and Comparative Examples are described in Tables 1 and 2.

### (Film formation of lustrous resin layer)

A later-described coating liquid for a lustrous resin layer was applied onto the transparent resin layer of the substrate on which the transparent resin layer was film-formed. The application amount was adjusted such that the film thickness of the lustrous resin layer after heating was 30 µm.

Immediately after the application, heating was performed at 180°C for 2 minutes to laminate a lustrous resin layer. Thereafter, the resultant product was cooled to room temperature to produce an intermediate laminate including a metallic decorative laminate.

The substrate was peeled off from the obtained intermediate laminate, and chemical resistance evaluation, weather resistance evaluation, heat resistance evaluation, designability evaluation, and total light transmittance measurement were performed on the transparent resin layer side. The results are described in Tables 3 and 4 together with other Examples and Comparative Examples.

### (Coating liquid for lustrous resin layer)

To 37.45 g of butyl carbitol acetate (manufactured by Sankyo Kasei Sangyo Co., Ltd.), 8.75 g of an acrylic resin (SK540 manufactured by Asahi Kasei Corporation) was added. The mixture was stirred at room temperature to obtain a uniform solution. Further, other components (0.57 g of ultraviolet absorber (Tinuvin 900 manufactured by BASF Japan Ltd.) and 0.06 g of a nucleating agent (A-3000 manufactured by Mitsubishi Chemical Corporation)), a coloring matter 1 (used such that the coloring matter component was 2.00 parts by mass with respect to 100 parts by mass of the resin component 1), and 13.16 g of a fluorine-based resin (Kyanr 301 manufactured by Arkema K.K.) were added and stirred to obtain a solution containing a resin component (1). To the obtained solution containing the resin component (1), 1.13 g of a lustrous material 1 was added. The mixture was further stirred to obtain a coating liquid for a lustrous resin layer.

The contents of the acrylic resin, the fluorine-based resin, and the other components in the resin component (1) used in Examples and Comparative Examples are described in Tables 1 and 2.

In Tables 1 and 2, the contents of the acrylic resin, the fluorine-based resin, and the other components in the resin components (1) and (2) are described, and the amounts (parts by mass) of the coloring matter and the lustrous material used when the resin component (1) is 100 parts by mass are described. In the tables, "-" means not used.

**[Table 1]**

| | | Example 1 | Example 2 | Example 3 | Comparative Example 1 | Comparative Example 2 | Comparative Example 3 |
|---|---|---|---|---|---|---|---|
| Lustrous resin layer resin component (1) | Fluorine-based resin (mass%) | 58.40 | 58.40 | 58.40 | 58.40 | 58.40 | 58.40 |
| | Acrylic resin (mass%) | 38.80 | 38.80 | 38.80 | 38.80 | 38.80 | 38.80 |
| | Other components (mass%) | 2.80 | 2.80 | 2.80 | 2.80 | 2.80 | 2.80 |
| | Coloring matter (parts by mass) | Coloring matter 1 2.00 | Coloring matter 1 1.00 | Coloring matter 1 0.50 | Coloring matter 1 2.00 | Coloring matter 1 1.00 | Coloring matter 1 0.50 |
| | Lustrous material (parts by mass) | Lustrous material 1 1.50 | Lustrous material 1 1.50 | Lustrous material 1 1.50 | - | - | - |
| | Layer thickness (µm) | 30 | 30 | 30 | 30 | 30 | 30 |
| Transparent resin layer resin component (2) | Fluorine-based resin (mass%) | 58.40 | 58.40 | 58.40 | 58.40 | 58.40 | 58.40 |
| | Acrylic resin (mass%) | 38.80 | 38.80 | 38.80 | 38.80 | 38.80 | 38.80 |
| | Other components (mass%) | 2.80 | 2.80 | 2.80 | 2.80 | 2.80 | 2.80 |
| | Layer thickness (µm) | 30 | 30 | 30 | 30 | 30 | 30 |

**[Table 2]**

| | | Example 4 | Comparative Example 4 | Comparative Example 5 | Example 5 | Example 6 |
|---|---|---|---|---|---|---|
| Lustrous resin layer resin component (1) | Fluorine-based resin (mass%) | 58.40 | 58.40 | 58.40 | 58.40 | 58.40 |
| | Acrylic resin (mass%) | 38.80 | 38.80 | 38.80 | 38.80 | 38.80 |
| | Other components (mass%) | 2.80 | 2.80 | 2.80 | 2.80 | 2.80 |
| | Coloring matter (parts by mass) | Coloring matter 2 2.00 | Coloring matter 2 2.00 | Coloring matter 2 0.50 | Coloring matter 3 1.00 | Coloring matter 4 0.50 |
| | Lustrous material (parts by mass) | Lustrous material 2 0.10 | - | - | Lustrous material 3 0.15 | Lustrous material 2 0.10 |
| | Layer thickness (µm) | 30 | 30 | 30 | 30 | 30 |
| Transparent resin layer resin component (2) | Fluorine-based resin (mass%) | 58.40 | 58.40 | 58.40 | 58.40 | 58.40 |
| | Acrylic resin (mass%) | 38.80 | 38.80 | 38.80 | 38.80 | 38.80 |
| | Other components (mass%) | 2.80 | 2.80 | 2.80 | 2.80 | 2.80 |
| | Layer thickness (µm) | 30 | 30 | 30 | 30 | 30 |

### <Production of metallic article>

### (Film formation of adhesive layer and base layer)

On the lustrous resin layer of the intermediate laminate, a mixture of a main agent composed of a mixture of a polyester-based diol, a polycarbonate-based diol, carbodiimide, a silane coupling agent having an epoxy group, and ethyl acetate and a curing agent composed of an aliphatic isocyanate was used as a urethane-based adhesive for a metallic decorative sheet.

TM-K51 (manufactured by Toyo Morton Co., Ltd.) was used as the polyester-based diol, Duranol T5652 (manufactured by Asahi Kasei Corporation) was used as the polycarbonate-based diol, Carbodilite V-07 (manufactured by Nisshinbo Chemical Inc.) was used as the carbodiimide, KBM-403 (manufactured by Shin-Etsu Chemical Co., Ltd.) was used as the silane coupling agent having an epoxy group, and CAT-RT85 (manufactured by Toyo Morton Co., Ltd.) was used as the aliphatic isocyanate.

The urethane-based adhesive was applied to the surface of the lustrous resin layer using a bar coater such that a standard of a dry film thickness of the adhesive layer was 10 µm, and the applied product was dried at 60°C for 1 minute and was then laminated with a PET film (average thickness: 25 µm, Teflex FT3, manufactured by Toyobo Co., Ltd.) as a base layer to produce a multilayer laminate.

The substrate was peeled off from the obtained multilayer laminate to produce a decorative laminate.

Using the obtained decorative laminate, the base layer of the decorative laminate was clamped to a test mold using a pneumatic molding machine so as to be an article, then the metallic decorative laminate was preform-molded so as to fit the mold for an injection molding body at a preliminary shaping temperature of 160°C and a pressure of compressed air of 6 bar, and an unnecessary portion protruding from the mold was trimmed and cut to obtain a metallic article.

The decorative laminate and the metallic article obtained in Example 1 were subjected to chemical resistance evaluation, weather resistance evaluation, heat resistance evaluation, designability evaluation, and measurement of total light transmittance, and the results are described in Tables 3 and 4.

Post-molding design evaluation and moldability evaluation were both practically acceptable.

### (Example 2) to (Example 6) and (Comparative Example 1) to (Comparative Example 5)

Except that in Example 1, the film thickness, the amount of the fluorine-based resin used, the amount of the acrylic resin used, the type of the coloring matter, the amount of the coloring matter used, the type of the lustrous material, and the amount of the lustrous material used were changed as described in Tables 1 and 2, the same procedure as in Example 1 was carried out to produce a decorative laminate and a metallic article of each of Examples 2 to 6 and Comparative Examples 1 to 5. For the "coloring matter" and the "lustrous material" in Tables 1 and 2, the materials used are described in the upper row, and the amounts (parts by mass) used with respect to 100 parts by mass of the resin component (1) are described in the lower row.

The decorative laminate and the metallic article obtained in each of Examples 2 to 6 and Comparative Examples 1 to 5 were subjected to chemical resistance evaluation, weather resistance evaluation, heat resistance evaluation, designability evaluation, and measurement of total light transmittance, and the results are described in Tables 3 and 4.

Post-molding design evaluation and moldability evaluation were both practically acceptable.

**[Table 3]**

| | Example 1 | Example 2 | Example 3 | Comparative Example 1 | Comparative Example 2 | Comparative Example 3 |
|---|---|---|---|---|---|---|
| Chemical resistance evaluation | A | A | A | B | B | B |
| Weather resistance evaluation | A | A | A | A | A | A |
| Heat resistance evaluation | A | A | A | A | A | A |
| Designability evaluation | A | A | A | B | B | B |
| Total light transmittance | 28.2% | 32.7% | 35.7% | | | |

**[Table 4]**

| | Example 4 | Comparative Example 4 | Comparative Example 5 | Example 5 | Example 6 |
|---|---|---|---|---|---|
| Chemical resistance evaluation | A | B | C | B | A |
| Weather resistance evaluation | A | A | A | A | A |
| Heat resistance evaluation | A | A | A | A | A |
| Designability evaluation | A | B | B | A | A |

From the results of Examples 1 to 6 shown in Tables 3 and 4, it was found that the metallic decorative laminate of the present embodiment exhibited a metallic design and had excellent characteristics in chemical resistance, weather resistance, heat resistance, and total light transmittance. In addition, an environmental load due to the generation of waste liquid such as metal plating was suppressed.

Further, it was confirmed that all of the metallic articles including the metallic decorative laminate had no problem in practical use.

On the other hand, in Comparative Examples 1 to 5, the lustrous resin layer did not contain a lustrous material, so that a metallic design was not developed.

### INDUSTRIAL APPLICABILITY

The metallic decorative laminate, the intermediate laminate, the multilayer laminate, the decorative laminate, and the metallic article of the present embodiment exhibit an excellent metallic design, reduce an environmental load during production, have chemical resistance and weather resistance, are also excellent in productivity, can impart metallic decorativeness and designability instead of plating or a metal material, and are suitably used for automobiles, home appliances, information terminals, and the like.

### LIST OF REFERENCE SIGNS

- 1: metallic decorative laminate
- 2: intermediate laminate
- 3: decorative laminate
- 4: multilayer laminate
- 10: substrate (release layer)
- 20: transparent resin layer
- 30: lustrous resin layer
- 31: surface of lustrous resin layer opposite to article
- 32: surface of lustrous resin layer on article side
- 40: adhesive layer
- 50: base layer
- 100: thickness direction
- 110: width direction
- 120: longitudinal direction
- 200: lustrous material
- 210: thickness direction of lustrous material
- 211: thickness of lustrous material
- 220: particle diameter direction of lustrous material
- 221: particle diameter of lustrous material

## Claims

1. A metallic decorative laminate comprising:
a lustrous resin layer including a resin component (1), one or two or more coloring matters, and one or two or more lustrous materials, the resin component (1) containing one or two or more fluorine-based resins; and
a transparent resin layer including a resin component (2) containing one or two or more fluorine-based resins.

2. The metallic decorative laminate according to claim 1, wherein the resin component (1) further contains one or two or more thermoplastic resins.

3. The metallic decorative laminate according to claim 2, wherein the lustrous material in the lustrous resin layer is 0.01 parts by mass or more and 20.00 parts by mass or less with respect to 100 parts by mass of the resin component (1).

4. The metallic decorative laminate according to claim 1, wherein the lustrous material contains at least one material selected from scaly or flaky metal, scaly or flaky alloy, scaly or flaky metal oxide, scaly or flaky mica, glass flakes, and a film pulverized body.

5. The metallic decorative laminate according to claim 1, wherein the coloring matter in the lustrous resin layer is 0.05 parts by mass or more and 20.00 parts by mass or less with respect to 100 parts by mass of the resin component (1).

6. The metallic decorative laminate according to claim 1, wherein the coloring matter contains an inorganic pigment or an organic pigment.

7. The metallic decorative laminate according to claim 1, wherein the resin component (2) further contains one or two or more thermoplastic resins.

8. An intermediate laminate comprising a substrate on a transparent resin layer side of the metallic decorative laminate according to claim 1.

9. A multilayer laminate comprising a base layer on a lustrous resin layer side of the intermediate laminate according to claim 8.

10. A decorative laminate comprising a base layer on a lustrous resin layer side of the metallic decorative laminate according to claim 1.

11. A metallic article comprising the metallic decorative laminate according to claim 1.

12. A method for producing the intermediate laminate according to claim 8, comprising, in this order:
applying a coating liquid containing one or two or more fluorine-based resins;
applying a coating liquid containing one or two or more fluorine-based resins, one or two or more coloring matters, and one or two or more lustrous materials; and
heating the coating liquid.

13. A method for producing the decorative laminate according to claim 10, comprising peeling the substrate from the multilayer laminate according to claim 9.
